# EUROPÄISCHE PATENTSCHRIFT

(11) **EP 3 262 747 B1**
(45) Veröffentlichungstag und Bekanntmachung des Hinweises auf die Patenterteilung: **05.08.2020**
(21) Anmeldenummer: 16701647.6
(22) Anmeldetag: 27.01.2016
(51) Int. Cl.: H02P 1/46, H02P 21/00, H02P 27/04, F04C 28/06

(54) **HAUSHALTSKÄLTEGERÄT MIT EINEM KÄLTEMITTELKREISLAUF UND VERFAHREN ZUM BETREIBEN EINES HAUSHALTSKÄLTEGERÄTS MIT EINEM KÄLTEMITTELKREISLAUF**
DOMESTIC REFRIGERATION DEVICE WITH A COOLANT CIRCUIT, AND METHOD FOR OPERATING A DOMESTIC REFRIGERATION DEVICE WITH A COOLANT CIRCUIT
APPAREIL DE FROID MÉNAGER MUNI D'UN CIRCUIT FRIGORIFIQUE ET PROCÉDÉ POUR FAIRE FONCTIONNER UN APPAREIL DE FROID MÉNAGER MUNI D'UN CIRCUIT FRIGORIFIQUE

(30) Priorität: 23.02.2015 DE 102015203144
(43) Veröffentlichungstag der Anmeldung: 03.01.2018
(73) Patentinhaber: BSH Hausgeräte GmbH, 81739 München (DE)
(72) Erfinder: PAULDURO, Achim, 89129 Albeck (DE); BECKMANN, Tommy, 78247 Hilzingen (DE); WALTER, Axel, 13599 Berlin (DE); KLEIN, Moritz, 89537 Giengen (DE)
(86) Internationale Anmeldenummer: PCT/EP2016/051632
(87) Internationale Veröffentlichungsnummer: WO 2016/134908

(56) Entgegenhaltungen:
- EP-A2- 0 784 378
- JP-A- 2005 049 013
- JP-A- 2007 236 048
- JP-A- 2008 245 411
- US-A1- 2011 056 226

## Beschreibung

Die Erfindung betrifft ein Haushaltskältegerät mit einem Kältemittelkreislauf und ein Verfahren zum Betreiben eines Haushaltskältegeräts mit einem Kältemittelkreislauf.

Haushaltskältegeräte umfassen einen kühlbaren Innenraum zum Lagern von Lebensmitteln und einen Kältemittelkreislauf zum Kühlen des kühlbaren Innenraums. Der Kältemittelkreislauf umfasst insbesondere einen Verdichter, einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

Die DE 10 2010 030 240 A1 offenbart ein solches Haushaltskältegerät, bei dem der Verdichter mit einem als ein bürstenlosen Gleichstrommotor angetrieben wird. Ein bürstenloser Gleichstrommotor ist allgemein ein permanenterregter Drehstromsynchronmotor. Der bürstenlose Gleichstrommotor wird von einem Wechselrichter angesteuert.

Die JP 2005049013 A offenbart ein Haushaltskältegerät mit einem Verdichter und einem feldorientiert geregelten Antrieb, der einen bürstenlosen Gleichstrommotor umfasst.

Permanenterregte Drehstromsynchronmotoren können Teil eines geregelten elektrischen Antriebs sein, dessen Regelung als eine z.B. aus der DE 102 06 191 B4 im Prinzip dem Fachmann bekannte feldorientierte Regelung ausgebildet sein kann. Bei der feldorientierten Regelung, die auch als Vektorregelung (Englisch: vector control) bezeichnet wird, werden die elektrischen Spannungen und Ströme des Drehstromsynchronmotors in Form von Raumzeigern zusammengefasst. Die Raumzeiger beziehen sich auf ein statorfestes Koordinatensystem und bewegen sich synchron mit dem Rotor des Drehstromsynchronmotors. Um die Größen auf den Rotor zu beziehen, werden diese Größen auf ein rotorfestes d, q- Koordinatensystem transformiert.

Für die feldorientierte Regelung ergibt sich eine Regelstruktur, bei der die transformierten Ströme *i_{d}* (Längsstrom), *i_{q}* (Querstrom) geregelt werden, vorzugsweise mittels Pl-Regler. Diese Stromregelungen bilden innerhalb einer Kaskadenstruktur innenliegende Stromregelkreise, denen ein äußerer Drehzahlregelkreis überlagert ist. Dabei liefert der Querstrom *i_{q}* hauptsächlich das Drehmoment (Hauptdrehmoment) des Drehstromsynchronmotors. Der Sollwert der Stromregelschleife für den Längsstrom *i_{d}* ist in der Regel "Null". Die Figur 1 der DE 102 06 191 B4 zeigt eine solche Regelstruktur für einen Asynchronmotor. Bei Verwendung eines Drehstromsynchronmotors entfällt der in der DE 102 06 191 B4 genannte Flussrechner und der Sollwert der Stromregelschleife für den Längsstrom *i_{d}* ist "Null".

Bei permanenterregten Drehstromsynchronmotoren, wie z.B. bei sogenannten bürstenlosen Gleichstrommotoren (BLDC-Motoren), können die den Quer- und Längsströmen zugeordneten Querinduktivitäten *L_{q}* und Längsinduktivitäten *L_{d}* verschieden große Werte haben. So kann auch der Längsstrom *i_{d}* ein Drehmoment liefern (Reluktanzbeitrag, Reluktanzmoment).

Beispielsweise aus der DE 102 06 191 B4 ist es auch bekannt, dass beim permanenterregten Drehstromsynchronmotor der Drehzahlbereich nach oben erweitert werden kann, wenn man im oberen Drehzahlbereich einen feldentgegenwirkenden Strom einprägt. Dazu wird der Sollwert der Stromregelschleife für den Längsstrom *i_{d}* kleiner "Null" gewählt, wodurch sich jedoch das Gesamtdrehmoment des permanenterregten Drehstromsynchronmotors verringert. Dies wird als Feldschwächbetrieb bezeichnet.

Die JP 2007236048 und die US 20222/0056226 A1 offenbaren jeweils einen Anfahrmodus für einen feldorientiert geregelten elektrischen Antrieb mit einem permanent erregten Synchronmotor. Während des Anfahrmodus wird der Sollquerstrom bzw. die Solldrehzahl auf "Null" gesetzt und der Solllängsstrom erhöht, bis er einen vorbestimmten Wert erreicht hat. Anschließend wird in den drehzahlgeregelten Betriebsmodus gewechselt, wobei zunächst der Solllängsstrom konstant gehalten und die Solldrehzahl erhöht wird, bis ein sensorloser drehzahlgeregelter Betrieb möglich ist. Ab da wird der Längsstrom-Sollwert auf "Null" gesetzt.

Aufgabe der Erfindung ist es, ein Haushaltskältegerät, das einen kühlbaren Innenraum und einen zum Kühlen des kühlbaren Innenraums vorgesehenen Kältemittelkreislauf mit einem Verdichter aufweist, anzugeben, dessen zum Antreiben des Verdichters vorgesehener, einen permanenterregten Drehstromsynchronmotor aufweisender, elektrischer Antrieb ein verbessertes Betriebsverhalten, insbesondere ein verbessertes Anlaufverhalten aufweist.

Die Aufgabe der Erfindung wird gelöst durch ein Haushaltskältegerät, aufweisend einen wärmeisolierten Korpus mit einem kühlbaren Innenbehälter, der einen zum Lagern von Lebensmitteln vorgesehenen kühlbaren Innenraum begrenzt, einen zum Kühlen des kühlbaren Innenraum vorgesehenen Kältemittelkreislauf mit einem Verdichter, und einen geregelten elektrischen Antrieb, der eine feldorientierte Regelung, einen Umrichter und einen dem Umrichter nachgeschalteten permanenterregten Drehstromsynchronmotor, der Teil des Verdichters ist oder vorgesehen ist, den Verdichter anzutreiben, aufweist, wobei die feldorientierte Regelung einen zum Regeln eines ein Hauptdrehmoment des permanenterregten Drehstromsynchronmotors erzeugenden Querstroms vorgesehenen ersten Stromregelkreis, einen zum Regeln eines Längsstroms für den permanenterregten Drehstromsynchronmotor vorgesehenen zweiten Stromregelkreis, und einen den Stromregelkreisen überlagerten Drehzahlregelkreis aufweist, welcher abhängig von einer vorgegebenen Soll-Drehzahl für den permanenterregten Drehstromsynchronmotor und einer Ist-Drehzahl des permanenterregten Drehstromsynchronmotors einen Querstrom-Sollwert für den ersten Stromregelkreis erzeugt, und die Ausgangssignale der beiden Stromregelkreise zumindest indirekt zum Ansteuern des Umrichters vorgesehen sind, und wobei das Haushaltskältegerät eingerichtet ist, für ein Anfahren des permanenterregten Drehstromsynchronmotors aus dem Stillstand eine Soll-Drehzahl für die feldorientierte Regelung in Abhängigkeit eines Kühlbedarfs für den kühlbaren Innenraum zu ermitteln, und einen für den zweiten Stromregelkreis vorgesehenen Längsstrom-Sollwert oder dessen Betrags beginnend von "Null" bis zu einem vorgegebenen Wert innerhalb einer ersten Zeitdauer gemäß eines vorgegebenen Verlaufs anzupassen, sodass der permanenterregte Drehstromsynchronmotor aufgrund des resultierenden Längsstroms ein zum Hauptdrehmoment zusätzliches Drehmoment erzeugt, sodass das Gesamtdrehmoment des permanenterregten Drehstromsynchronmotors größer ist als das Hauptdrehmoment.

Ein weiterer Aspekt der Erfindung ist ein Verfahren zum Betreiben eines Haushaltskältegeräts, das einen wärmeisolierten Korpus mit einem kühlbaren Innenbehälter, der einen zum Lagern von Lebensmitteln vorgesehenen kühlbaren Innenraum begrenzt, einen zum Kühlen des kühlbaren Innenraum vorgesehenen Kältemittelkreislauf mit einem Verdichter, und einen feldorientierten elektrischen Antrieb aufweist, wobei der feldorientierte geregelte elektrische Antrieb eine feldorientierte Regelung, einen Umrichter und einen dem Umrichter nachgeschalteten permanenterregten Drehstromsynchronmotor, der Teil des Verdichters ist oder vorgesehen ist, den Verdichter anzutreiben, aufweist, wobei die feldorientierte Regelung einen zum Regeln eines ein Hauptdrehmoment des permanenterregten Drehstromsynchronmotors erzeugenden Querstroms vorgesehenen ersten Stromregelkreis, einen zum Regeln eines Längsstroms für den permanenterregten Drehstromsynchronmotor vorgesehenen zweiten Stromregelkreis, und einen den Stromregelkreis überlagerten Drehzahlregelkreis aufweist, welcher abhängig von einer vorgegebenen Soll-Drehzahl für den permanenterregten Drehstromsynchronmotor und einer Ist-Drehzahl des permanenterregten Drehstromsynchronmotors einen Querstrom-Sollwert für den ersten Stromregelkreis erzeugt, und die Ausgangssignale der beiden Stromregelkreise zumindest indirekt zum Ansteuern des Umrichters vorgesehen sind, aufweisend folgende Verfahrensschritte:
- für ein Anfahren des permanenterregten Drehstromsynchronmotor aus dem Stillstand, Umsetzten einer Soll-Drehzahl für die feldorientierte Regelung in Abhängigkeit eines Kühlbedarfs für den kühlbaren Innenraum, und
- Annähern eines für den zweiten Stromregelkreis vorgesehenen Längsstrom-Sollwertes oder dessen Betrags beginnend von "Null" bis zu einem vorgegebenen Wert innerhalb einer ersten Zeitdauer gemäß eines vorgegebenen Verlaufs, sodass der permanenterregte Drehstromsynchronmotor aufgrund des resultierenden Längsstroms ein zum Hauptdrehmoment zusätzliches Drehmoment erzeugt, sodass das Gesamtdrehmoment des permanenterregten Drehstromsynchronmotors größer ist als das Hauptdrehmoment.

Das erfindungsgemäße Haushaltskältegerät ist somit ausgebildet, das erfindungsgemäße Verfahren auszuführen.

Das erfindungsgemäße Haushaltskältegerät umfasst den wärmeisolierten Korpus mit dem Innenbehälter, der den kühlbaren Innenraum begrenzt. Der kühlbare Innenraum ist zum Lagern von Lebensmitteln vorgesehen und wird mittels des Kältemittelkreislaufs gekühlt.

Der kühlbare Innenraum kann vorzugsweise mittels eines Türblatts verschlossen werden. Das Türblatt ist vorzugsweise bezüglich einer Achse, die vorzugsweise vertikal verläuft, schwenkbar gelagert. Im geöffneten Zustand ist der kühlbare Innenraum zugänglich.

Der Kältemittelkreislauf als solcher ist dem Fachmann im Prinzip bekannt und umfasst den Verdichter und insbesondere einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

Im Betrieb des erfindungsgemäßen Haushaltskältegeräts wird der Verdichter mittels des permanenterregten Drehstromsynchronmotors angetrieben. Der permanenterregte Drehstromsynchronmotor kann auch Teil des Verdichters sein.

Im Betrieb des Verdichters wird der permanenterregte Drehstromsynchronmotor mit einer z.B. von einer elektronischen Steuervorrichtung oder einer Temperaturregelung ermittelten bzw. vorgegebenen Drehzahl betrieben. Daher ist der permanenterregte Drehstromsynchronmotor Teil des geregelten elektrischen Antriebs. Für ein verbessertes Regelverhalten basiert der elektrische geregelte Antrieb auf der feldorientierten Regelung.

Die feldorientierte Regelung umfasst die beiden Stromregelkreise, von denen der erste Stromregelkreis vorgesehen ist, den Querstrom und der zweite Stromregelkreis vorgesehen ist, den Längsstrom des permanenterregten Drehstromsynchronmotor zu regeln. Die Ausgangssignale der beiden Stromregelkreise sind vorgesehen, zumindest indirekt den Umrichter anzusteuern. Die Führungsgröße des ersten Stromregelkreises ist insbesondere der Querstrom-Sollwert und die Führungsgröße des zweiten Stromregelkreises ist insbesondere der Längsstrom-Sollwert.

Der erste Stromregelkreis kann vorzugsweise einen ersten Stromregler und der zweite Stromregelkreis einen zweiten Stromregler aufweisen. Die beiden Stromregler sind vorzugsweise PI Stromregler. Das Eingangssignal für den ersten Stromregler ist vorzugsweise eine Abweichung des Querstrom-Istwerts vom Querstrom-Sollwert, und das Eingangssignal für den zweiten Stromregler ist vorzugsweise eine Abweichung des Längsstrom-Istwert vom Längsstrom-Sollwert.

Den beiden Stromregelkreise ist der Drehzahlregelkreis überlagert, welcher abhängig von einer vorgegebenen Soll-Drehzahl für den permanenterregten Drehstromsynchronmotor und einer Ist-Drehzahl des permanenterregten Drehstromsynchronmotors den Querstrom-Sollwert für den ersten Stromregelkreis erzeugt. Die Führungsgröße des Drehzahlregelkreises ist vorzugsweise die Soll-Drehzahl des permanenterregten Drehstromsynchronmotors.

Vorzugsweise umfasst der Drehzahlregelkreis einen Drehzahlregler, der insbesondere als ein Pl-Drehzahlregler ausgeführt ist. Das Eingangssignal für den Drehzahlregler ist vorzugsweise eine Abweichung der Ist-Drehzahl von der Soll-Drehzahl.

Wie bereits in der Einleitung ausgeführt, ist der Querstrom ursächlich für das Hauptdrehmoment des permanenterregten Drehstromsynchronmotors. Bei permanenterregten Drehstromsynchronmotoren kann jedoch auch der Längsstrom ein zusätzliches Drehmoment erzeugen, welches bei entsprechendem Beaufschlagen das Gesamtdrehmoment des permanenterregten Drehstromsynchronmotors erhöht. Dies ist insbesondere bei bürstenlosen Gleichstrommotoren der Fall, weshalb der permanenterregte Drehstromsynchronmotor vorzugsweise ein bürstenloser Gleichstrommotor ist.

Um das Anfahrverhalten des Verdichters bzw. des permanenterregten Drehstromsynchronmotors zu verbessern, wird erfindungsgemäß zunächst bei stehendem permanenterregten Drehstromsynchronmotor ein Soll-Drehmoment aufgrund einer geforderten Kühlung des kühlbaren Innenraums z.B. mittels der elektronischen Steuervorrichtung ermittelt, um entsprechend die feldorientierte Regelung bzw. der Drehzahlregelkreis oder den Drehzahlregler zu betreiben. Dadurch ergibt sich das Hauptdrehmoment.

Um beim Anfahren ein zum Hauptdrehmoment zusätzliches Drehmoment zu erhalten, wird erfindungsgemäß der Längsstrom-Sollwert entsprechend vorgegeben. Erfindungsgemäß wird der für den zweiten Stromregelkreis vorgesehene Längsstrom-Sollwerte oder dessen Betrags beginnend von "Null" bis zum vorgegebenen Wert innerhalb der ersten Zeitdauer derart angepasst bzw. erhöht, sodass das Gesamtdrehmoment des permanenterregten Drehstromsynchronmotors größer ist als das Hauptdrehmoment. Dadurch, dass der Längsstrom-Sollwert bzw. dessen Betrag innerhalb der ersten Zeitdauer auch gemäß eines vorgegebenen Verlaufs angenähert, vorzugsweise stetig erhöht wird, bedarf es keiner aufwändigen Berechnung des Längsstrom-Sollwertes, wodurch die Rechenleistung des Haushaltskältegerätes relativ klein ausgeführt sein kann.

Vorzugsweise erfolgt das stetige Erhöhen des Längsstrom-Sollwertes oder dessen Betrags während der ersten Zeitdauer rampenförmig. Der Verlauf des Anpassens, vorzugsweise des stetigen Erhöhens vorzugsweise in einer Look-up Tabelle gespeichert. Die Look-up Tabelle kann z.B. Teil der elektronischen Steuervorrichtung sein. Der Verlauf kann auch mittels einer mathematischen Formel bestimmt wird.

Sobald der permanenterregte Drehstromsynchronmotor angefahren ist, kann es vorgesehen sein, den Längsstrom-Sollwert wieder auf "Null" zu reduzieren.

Gemäß einer Ausführungsform ist es daher vorgesehen, den Längsstrom-Sollwert oder dessen Betrag auf "Null" zu reduzieren, sobald der permanenterregte Drehstromsynchronmotor einen stabilen Arbeitspunkt erreicht hat, um danach die feldorientierte Regelung mit einem Längsstrom-Sollwert gleich "Null" zu betreiben. Der stabile Arbeitspunkt kann z.B. dadurch erkannt werden, wenn die Abweichung zwischen der Soll-Drehzahl und der Ist-Drehzahl einen vorbestimmten Wert unterschreitet.

Vorzugsweise ist es nach einer Ausführung vorgesehen, den Längsstrom-Sollwert oder dessen Betrags nach einer vorgegeben zweiten Zeitdauer auf "Null" zu reduzieren, um danach die feldorientierte Regelung mit einem Längsstrom-Sollwert gleich "Null" zu betreiben. Da die zweite Zeitdauer vorgegeben ist, wird ebenfalls relativ wenig Rechenleistung benötigt. Die zweite Zeitdauer ist insbesondere derart lange gewählt, dass der permanenterregte Drehstromsynchronmotor zuverlässig einen stabilen Arbeitspunkt erreicht.

Um insbesondere den elektrischen Antrieb relativ robust auszuführen, wird vorzugsweise der Längsstrom-Sollwert oder dessen Betrag von seinem vorgegebenen Wert bis auf "Null" innerhalb einer vorgegebenen dritten Zeitdauer gemäß eines vorgegebenen Verlaufs reduziert. Dieser Verlauf ist vorzugsweise rampenförmig und/oder vorzugsweise in der Look-up Tabelle gespeichert.

Um den permanenterregten Drehstromsynchronmotor auch mit relativ hohen Drehzahlen betreiben zu können, kann es vorgesehen sein, den elektrischen Antrieb in einem Feldschwächbetrieb zu betreiben.

Ein Ausführungsbeispiel der Erfindung ist exemplarisch in den beigefügten schematischen Zeichnungen dargestellt. Es zeigen:
- Fig. 1: ein Haushaltskältegerät in einer perspektivischen Darstellung,
- Fig. 2: einen Kältemittelkreislauf des Haushaltskältegerätes,
- Fig. 3: einen feldorienteiert geregelten elektrischen Antrieb für den Verdichter des Kältemittelkreislaufs, und
- Fig. 4: ein Teil der Stromregelung der feldorientierten Regelung.

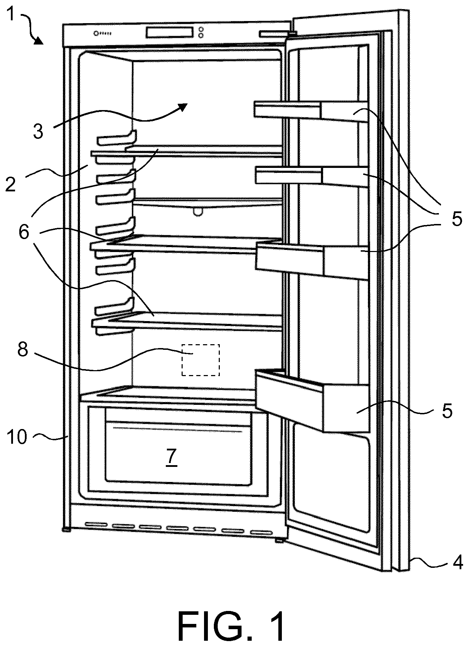

Die Fig. 1 zeigt in einer perspektivischen Darstellung ein Haushaltskältegerät 1, das einen wärmeisolierten Korpus 10 mit einem Innenbehälter 2 umfasst, der einen kühlbaren Innenraum 3 begrenzt. Der kühlbare Innenraum 3 ist zum Lagern von nicht näher dargestellten Lebensmitteln vorgesehen.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

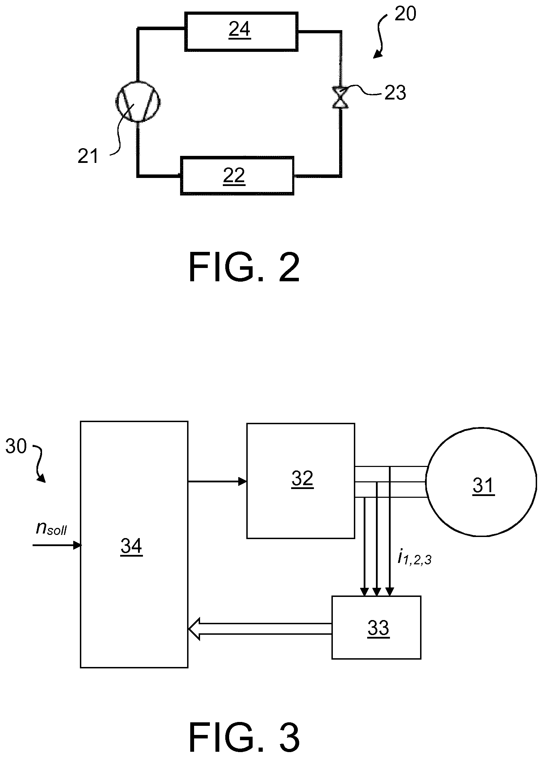

Das Haushaltskühlgerät 1 umfasst einen in der Fig. 2 gezeigten Kältemittelkreislauf 20 zum Kühlen des kühlbaren Innenraums 3. Im Falle des vorliegenden Ausführungsbeispiels umfasst der Kältemittelkreislauf 20 des kühlbaren Innenraums 3 einen Verdichter 21, einen dem Verdichter 21 nachgeschalteten Verflüssiger 22, eine dem Verflüssiger 22 nachgeschaltete Drosselvorrichtung 23, die insbesondere als ein Drossel- oder Kapillarrohr ausgeführt ist, und einen Verdampfer 24, der zwischen der Drosselvorrichtung 23 und dem Verdichter 21 angeordnet ist. Der Verdichter 21 ist vorzugsweise innerhalb eines Maschineraums des Haushaltkältegerätes 1 angeordnet, der sich insbesondere hinter der Schublade 7 befindet.

Das Haushaltskältegerät 1 umfasst im Falle des vorliegenden Ausführungsbeispiels eine elektronische Steuervorrichtung 8, die eingerichtet ist, die Kältevorrichtung, insbesondere den Verdichter 21 des Kältemittelkreislaufs 20 in für den Fachmann in allgemein bekannter Weise derart anzusteuern, dass der kühlbare Innenraum 3 zumindest in etwa eine vorgegebene oder vorgebbare Soll-Temperatur aufweist. Die elektronische Steuervorrichtung 8 ist vorzugsweise derart eingerichtet, dass sie die Temperatur des kühlbaren Innenraums 3 regelt. Um gegebenenfalls die Ist-Temperatur des kühlbaren Innenraums 3 zu erhalten, kann das Haushaltskältegerät 1 wenigstens einen nicht näher dargestellten und mit der elektronischen Steuervorrichtung 8 verbundenen Temperatursensor aufweisen.

Um den Kältemittelkreislauf 20 anzusteuern bzw. zu regeln, umfasst das Haushaltskältegerät einen in der Fig. 3 gezeigten geregelten elektrischen Antrieb 30, welcher einen permanenterregten Drehstromsynchronmotor aufweist, der vorzugsweise als ein bürstenloser Gleichstrommotor 31 ausgeführt ist. Der bürstenlose Gleichstrommotor 31 ist mit dem Verdichter 21 gekoppelt oder ist Teil des Verdichters 21 und treibt diesen bei Bedarf entsprechend einer von der elektronischen Steuervorrichtung 8 vorgegebenen Soll-Drehzahl *nₛₒₗₗ* an. Die Soll-Drehzahl *nₛₒₗₗ* wird insbesondere von der elektronischen Steuervorrichtung 8 aufgrund einer beabsichtigten Kühlung des kühlbaren Innenraums 3 berechnet bzw. vorgegeben, beispielsweise aufgrund der aktuellen Temperatur und der Soll-Temperatur des kühlbaren Innenraums 3.

Der geregelte elektrische Antrieb 30 umfasst ein Stellglied zum Antreiben des bürstenlosen Gleichstrommotors 31. Das Stellglied ist als Umrichter 32 ausgeführt und erzeugt im Betrieb des elektrischen Antriebs 30 eine dreiphasige oder mehrphasige Spannung, deren Grundschwingung eine Grundfrequenz und Amplitude aufweist, die indirekt abhängig von der Soll-Drehzahl *nₛₒₗₗ* und einer Ist-Drehzahl *nᵢₛₜ* des bürstenlosen Gleichstrommotors 31 ist.

Im Falle des vorliegenden Ausführungsbeispiels weist der geregelte elektrische Antrieb 30 Messvorrichtungen 33 auf, mittels derer die elektrischen Strangströme *i_{1,2,3}* des bürstenlosen Gleichstrommotors 31 gemessen werden und die Ist-Drehzahl ermittelt wird. Die Messvorrichtungen 33 bereiten gegebenenfalls die ermittelte Ist-Drehzahl *nᵢₛₜ* und die gemessenen elektrischen Strangströme *i_{1,2,3}* des bürstenlosen Gleichstrommotors 31 auf, sodass die ermittelte Ist-Drehzahl *nᵢₛₜ* und die gemessenen elektrischen Strangströme *i_{1,2,3}* des bürstenlosen Gleichstrommotors 31 von einer feldorientierten Regelung 34 des geregelten elektrischen Antriebs 30 in geeigneter Form verarbeitet werden können. Die Ist-Drehzahl *nᵢₛₜ* kann z.B., wie es beim vorliegenden Ausführungsbeispiels vorgesehen ist, aus den gemessenen Strangströme *i_{1,2,3}* ermittelt werden. Die Ist-Drehzahl *nᵢₛₜ* kann aber auch direkt mittels eines entsprechenden Sensors gemessen werden.

Im Falle des vorliegenden Ausführungsbeispiels basiert die Regelung des geregelten elektrischen Antriebs 30 auf der feldorientierten Regelung. Die prinzipielle Regelstruktur einer solchen Regelung ist z.B. aus der in der Einleitung genannten DE 102 06 191 B4 bekannt. Der Wesentliche Unterschied zwischen der feldorientierten Regelung des elektrischen Antriebs 30 zu einer konventionellen feldorientierten Regelung besteht in der Vorgabe der Sollwerte für den Längsstrom *i_{d}* im Betrieb des Haushaltskältegeräte 1, insbesondere für das Anfahren des Verdichters 21 bzw. des bürstenlosen Gleichstrommotors 31.

Die feldorientierte Regelung 34 bildet eine Kaskadenstruktur mit innenliegenden Stromregelkreisen, denen ein äußerer Drehzahlregelkreis überlagert ist.

Für die feldorientierte Regelung ergibt sich eine Regelstruktur, bei der die transformierten Quer- und Längsströme *i_{q}*, *i_{d}* mittels der Stromregelkreise geregelt werden. Im Falle des vorliegenden Ausführungsbeispiels umfassen die Stromregelkreise vorzugsweise einen ersten Stromregler 41 für den Querstrom *i_{q}* und einen zweiten Stromregler 41 für den Längsstrom *i_{d}.* Die beiden Stromregler 41, 42 sind insbesondere Pl-Regler.

Die feldorientierte Regelung 34 ist im Falle des vorliegenden Ausführungsbeispiels derart ausgeführt, dass sie die Strangströme *i_{1,2,3}* des bürstenlosen Drehstrommotors 31 in auf den Rotor des bürstenlosen Gleichstrommotors 31 bezogene rotorfeste Längs- und Querstrom-Ist-Werte *i_{s,d}, i_{s,q}* transformiert. Die Abweichung zwischen dem Sollwert *i_{q,soll}* des Querstroms *i_{q}* und dem Querstroms-Ist-Wert *i_{s,q}* ist das Eingangssignal für den ersten Stromregler 41, und die Abweichung zwischen dem Längsstrom-Sollwert *i_{d,soll}* und dem Längsstrom-Ist-Wert *i_{s,d}* ist das Eingangssignal für den zweiten Stromregler 42.

Die Ausgangssignale der beiden Stromregler 41, 42 entsprechen transformierten elektrischen Spannungen *u_{q}*, *u_{d}*, welche mittels einer nicht dargestellten, dem Fachmann im Prinzip bekannten Transformation in zum Ansteuern des Umrichters 32 geeignete Signale transformiert werden.

Der Querstrom-Sollwert *i_{q,soll}* ergibt sich im Falle des vorliegenden Ausführungsbeispiels aufgrund dieses äußeren Drehzahlregelkreises, welche abhängig von der Soll-Drehzahl *nₛₒₗₗ* und der Ist-Drehzahl *nᵢₛₜ*, insbesondere abhängig von der Drehzahlabweichung *n_{abw}*, die sich aus der gemessenen und der vorgegebenen Soll-Drehzahl *nₛₒₗₗ* ergibt, berechnet wird.

Der Drehzahlregelkreis umfasst im Falle des vorliegenden Ausführungsbeispiels einen Drehzahlregler 43, der vorzugsweis als ein Pl-Regler ausgeführt ist. Das Ausgangssignal des Drehzahlreglers 43 ist der Querstrom-Sollwert *i_{q,soll}.*

Der bürstenlose Gleichstrommotor 31 ist derart ausgeführt, dass auch der Längsstrom *i_{d}* eine drehmomentbildende Komponente zu bildend vermag, welche bei entsprechendem Längsstrom *i_{d}* zusätzlich zu dem vom Querstrom *i_{q}* erzeugten Hauptdrehmoment wirkt. Somit ist es möglich, bei entsprechendem Längsstrom *i_{d}* das Gesamtdrehmoment über das Hauptdrehmoment des bürstenlosen Gleichstrommotors 31 zu erhöhen.

Im Falle des vorliegenden Ausführungsbeispiels ist das Haushaltskältegerät 1 derart ausgeführt, dass es je nach Betriebsmodus unterschiedliche Längsstrom-Sollwerte *i_{d,soll}* erzeugt. Die Längsstrom-Sollwerte *i_{d,soll}* sind vorzugsweise in einer Look-Up Tabelle, die insbesondere in der elektronischen Steuervorrichtung 8 gespeichert ist, hinterlegt oder werden mittels einer mathematischen Gleichung bestimmt.

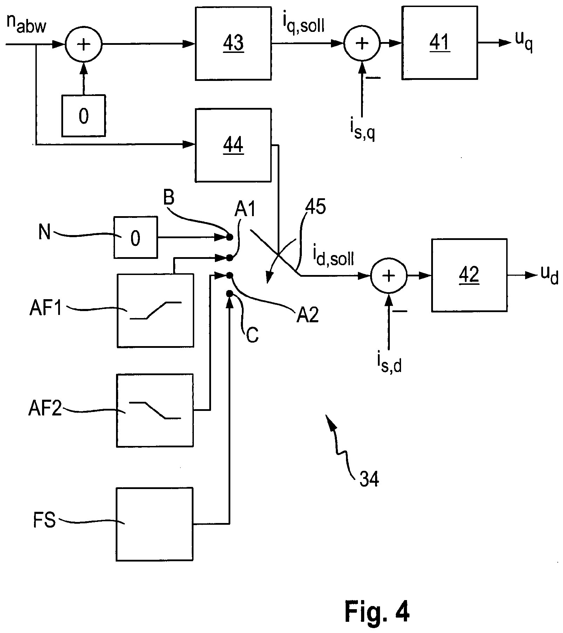

Die Entscheidung, welcher Längsstrom-Sollwert *i_{d,soll}* aktuell gilt, wird in der Figur 4 durch einen Funktionsblock 44 veranschaulicht, der einen Funktionsschalter 45 betätigt.

Beim Anfahren des Verdichters 21, d.h. beim Anfahren des still stehenden bürstenlosen Gleichstrommotors 31 auf eine Soll-Drehzahl *nₛₒₗₗ* gibt im Falle des vorliegenden Ausführungsbeispiels zunächst die elektronische Steuervorrichtung 8 die Soll-Drehzahl *nₛₒₗₗ* für den bürstenlosen Gleichstrommotor 31 vor. Außerdem wird der geregelte elektrische Antrieb 30 zunächst in einem Anfahrmodus betrieben, welcher funktionell durch Funktionsblöcke AF1 und AF2 in der Figur 4 dargestellt ist.

Während des Anfahrmodus wird zunächst der Längsstrom-Sollwert *i_{d,soll}* bzw. dessen Betrag beginnend von _{"}Null" stetig gemäß eines vorgegebenen Verlaufs erhöht, bis der Längsstrom-Sollwert *i_{d,soll}* bzw. dessen Betrag einen vorbestimmten Wert erreicht. Der Längsstrom-Sollwert *i_{d,soll}* ist dabei derart gewählt, dass dadurch der bürstenlose Gleichstrommotor 31 ein zu dem vom Querstrom *i_{q}* erzeugten Hauptdrehmoment zunehmend größer werdendes, durch den stetig sich erhöhenden Längsstrom *i_{d}* zusätzliches Drehmoment erzeugt, sodass das Gesamtdrehmoment des bürstenlosen Gleichstrommotors 31 größer ist als das Hauptdrehmoment. Der Verlauf des stetigen Erhöhens ist fest vorgegeben und ist vorzugsweise in der Look-up Tabelle gespeichert.

Vorzugsweise wird der Längsstrom-Sollwert *i_{d,soll}* bzw. dessen Betrag beginnend von _{"}Null" rampenförmig erhöht, wie dies mit dem Funktionsblock AF1 angedeutet ist. Für diesen Teil des Anfahrmodus schaltet der Funktionsblock 44 den Funktionsschalter 45 in eine Schalterstellung "A1".

Im Falle des vorliegenden Ausführungsbeispiels ist die Erhöhung des Längsstrom-Sollwerts *i_{d,soll}* bzw. dessen Betrag zeitgesteuert, d.h. dass der Längsstrom-Sollwert *i_{d,soll}* bzw. dessen Betrag nach einer vorbestimmten ersten Zeitdauer *T₁* seinen vorbestimmten Wert erreicht. Ist dieser vorbestimmte Wert erreicht, so weisen im eingeschwungenen bzw. ausgeregelten Zustand die Zeiger des Längsstroms *i_{d}* und der Zeiger des Querstroms *i_{q}* einen bestimmten Winkel auf.

Im Falle des vorliegenden Ausführungsbeispiels ist es vorgesehen, den Längsstrom-Sollwert nach dem Ende des Anfahrmodus auf "Null" zu setzten, insbesondere dann, wenn der bürstenlose Gleichstromantrieb 31 einen stabilen Arbeitspunkt erreicht hat und insbesondere mit einer relativ niedrigen Drehzahl betrieben werden soll bzw. mit einer Drehzahl unterhalb der maximalen Drehzahl von vorzugsweise weniger als 0,6 mal der maximalen Drehzahl. Dies ist mit einem Funktionsblock N in der Figur 4 veranschaulicht.

Der stabile Arbeitspunkt ist z.B. dann erreicht, wenn die Drehzahlabweichung *n_{abw}*, die sich aus der gemessenen Ist-Drehzahl *nᵢₛₜ* und der vorgegebenen Soll-Drehzahl *nₛₒₗₗ* ergibt, einen vorgegebenen Wert unterschreitet.

Im Falle des vorliegenden Ausführungsbeispiels ist es jedoch vorgesehen, den Längsstrom-Sollwert *i_{d,soll}* nach einer vorbestimmten zweiten Zeitdauer *T₂* nach dem Ende der ersten Zeitdauer *T₁* auf "Null" zu setzten. Ist der Längsstrom-Sollwert *i_{d,soll}* auf "Null" gesetzt, dann ist der Funktionsschalter 45 in eine Schalterstellung "B" geschaltet.

Im Falle des vorliegenden Ausführungsbeispiels wird jedoch der Längsstrom-Sollwert *i_{d,soll}* nicht abrupt auf "Null" gesetzt, sondern stetig von seinem vorbestimmten Wert auf "Null" zurück gefahren. Dies erfolgt vorzugsweise innerhalb einer vorgegebenen dritten Zeitdauer *T₃*. Vorzugsweise wird der Längsstrom-Sollwert *i_{d,soll}* bzw. dessen Betrag beginnend von dem vorbestimmten Wert rampenförmig verringert, wie dies mit dem Funktionsblock AF2 angedeutet ist.

Für diesem Teil des Anfahrmodus schaltet der Funktionsblock 44 den Funktionsschalter 45 in eine Schalterstellung "A2".

Im Falle des vorliegenden Ausführungsbeispiels ist es noch vorgesehen, dass der bürstenlose Gleichstrommotor 31 mit erhöhter Drehzahl betrieben werden kann. Um dies zu erreichen, kann der elektrische Antrieb 30 in einem Feldschwächbetrieb betrieben werden, was mit einem Funktionsblock FS in der Figur 4 angedeutet ist. Der Feldschwächbetrieb eines permanenterregten Drehstromsynchronmotors ist dem Fachmann im Prinzip bekannt und wird daher nicht näher erläutert.

Während des Feldschwächbetriebs wird in den bürstenlose Gleichstrommotor 31 ein feldentgegenwirkender Strom einprägt. Dazu wird der Längsstrom-Sollwert *i_{d,soll}* kleiner "Null" gewählt. Für den Feldschwächbetrieb ist der Funktionsschalter 45 in einer Schalterstellung "D" geschaltet.

### BEZUGSZEICHENLISTE

- 1: Haushaltskältegerät
- 2: Innenbehälter
- 3: kühlbarer Innenraum
- 4: Türblatt
- 5: Türabsteller
- 6: Fachböden
- 7: Schublade
- 8: elektronische Steuervorrichtung
- 10: Korpus
- 20: Kältemittelkreislauf
- 21: Verdichter
- 22: Verflüssiger
- 23: Drosselvorrichtung
- 24: Verdampfer
- 30: geregelter elektrischer Antrieb
- 31: bürstenloser Gleichstrommotor
- 32: Umrichter
- 33: Messvorrichtungen
- 34: feldorientierte Regelung
- 41, 42: Stromregler
- 43: Drehzahlregler
- 44: Funktionsblock
- 45: Funktionsschalter
- AF1, AF2: Funktionsblock
- A1, A2, B, C: Schalterstellung
- FS, N: Funktionsblock
- *i_{s,d}*: Längsstroms-Ist-Wert
- *i_{s,q}*: Querstroms-Ist-Wert
- *i_{q,soll}*: Querstroms-Sollwert
- *i_{d,soll}*: Längsstrom-Sollwert
- *i_{1,2,3}*: Strangströme
- *nₛₒₗₗ*: Soll-Drehzahl
- *u_{q}*, *u_{d}*: transformierte elektrische Spannungen
- *n_{abw}*: Drehzahlabweichung

## Patentansprüche

1. Verfahren zum Betreiben eines Haushaltskältegeräts (1), das einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraum (3) vorgesehenen Kältemittelkreislauf (20) mit einem Verdichter (21), und einen geregelten elektrischen Antrieb (30) aufweist, wobei der geregelte elektrische Antrieb (30) eine feldorientierte Regelung (34), einen Umrichter (32) und einen dem Umrichter (32) nachgeschalteten permanenterregten Drehstromsynchronmotor (31), der Teil des Verdichters (21) ist oder vorgesehen ist, den Verdichter (21) anzutreiben, aufweist, wobei die feldorientierte Regelung (34) einen zum Regeln eines ein Hauptdrehmoment des permanenterregten Drehstromsynchronmotors (31) erzeugenden Querstroms vorgesehenen ersten Stromregelkreis, einen zum Regeln eines Längsstroms für den permanenterregten Drehstromsynchronmotor (31) vorgesehenen zweiten Stromregelkreis, und einen den Stromregelkreisen überlagerten Drehzahlregelkreis aufweist, welcher abhängig von einer vorgegebenen Soll-Drehzahl (nₛₒₗₗ für den permanenterregten Drehstromsynchronmotor (31) und einer Ist-Drehzahl (nᵢₛₜ) des permanenterregten Drehstromsynchronmotors (30) einen Querstrom-Sollwert (i_{q,soll}) für den ersten Stromregelkreis erzeugt, und die Ausgangssignale der beiden Stromregelkreise zumindest indirekt zum Ansteuern des Umrichters (32) vorgesehen sind, **gekennzeichnet durch** folgende Verfahrensschritte:
- für ein Anfahren des permanenterregten Drehstromsynchronmotor (31) aus dem Stillstand, Ermitteln einer Soll-Drehzahl (nₛₒₗₗ für die feldorientierte Regelung (34) in Abhängigkeit eines Kühlbedarfs für den kühlbaren Innenraum (3), und
- Annäherung eines für den zweiten Stromregelkreis vorgesehenen Längsstrom-Sollwertes (i_{d,soll}) oder dessen Betrags beginnend von "Null" bis zu einem vorgegebenen Wert innerhalb einer ersten Zeitdauer gemäß eines vorgegebenen Verlaufs, sodass der permanenterregte Drehstromsynchronmotor (31) aufgrund des resultierenden Längsstroms ein zum Hauptdrehmoment zusätzliches Drehmoment erzeugt, sodass das Gesamtdrehmoment des permanenterregten Drehstromsynchronmotors (31) größer ist als das Hauptdrehmoment.

2. Verfahren nach Anspruch 1, bei dem der erste Stromregelkreis einen ersten Stromregler (41) und den zweiten Stromregelkreis einen zweiten Stromregler (42) aufweist, und das Eingangssignal für den ersten Stromregler (41) eine Abweichung des Querstrom-Istwerts (i_{s,q}) vom Querstrom-Sollwert (i_{q,soll}) und das Eingangssignal für den zweiten Stromregler (42) eine Abweichung des Längsstrom-Istwerts (i_{s,d}) vom Längsstrom-Sollwert (i_{d,soll}) ist.

3. Verfahren nach Anspruch 1 oder 2, bei dem das Anpassen des Längsstrom-Sollwertes (i_{d,soll}) oder dessen Betrags während der ersten Zeitdauer rampenförmig erfolgt und/oder bei dem der Verlauf der Anpassung in einer Look-up Tabelle gespeichert ist oder mittels einer mathematischen Formel bestimmt wird.

4. Verfahren nach einem der Ansprüche 1 bis 3, zusätzlich aufweisend folgende Verfahrensschritte:
- Reduzieren des Längsstrom-Sollwertes (i_{d,soll}) oder dessen Betrags auf "Null", sobald der permanenterregte Drehstromsynchronmotor (31) einen stabilen Arbeitspunkt erreicht hat oder nach einer vorgegebenen zweiten Zeitdauer, und anschließend
- Betreiben der feldorientierten Regelung (34) mit einem Längsstrom-Sollwert (i_{d,soll}) gleich "Null".

5. Verfahren nach Anspruch 4, aufweisend Reduzieren des Längsstrom-Sollwertes (i_{d,soll}) oder dessen Betrags von seinem vorgegebenen Wert bis auf "Null" innerhalb einer vorgegebenen dritten Zeitdauer gemäß eines vorgegebenen Verlaufs.

6. Haushaltskältegerät (1), aufweisend einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraum (3) vorgesehenen Kältemittelkreislauf (20) mit einem Verdichter (21), und einen feldorientierten elektrischen Antrieb (30), der eine feldorientierte Regelung (34), einen Umrichter (32) und einen dem Umrichter (32) nachgeschalteten permanenterregten Drehstromsynchronmotor (31), der Teil des Verdichters (21) ist oder vorgesehen ist, den Verdichter (21) anzutreiben, aufweist, wobei die feldorientierte Regelung (34) einen zum Regeln eines ein Hauptdrehmoment des permanenterregten Drehstromsynchronmotors (31) erzeugenden Querstroms vorgesehenen ersten Stromregelkreis, einen zum Regeln eines Längsstroms für den permanenterregten Drehstromsynchronmotor (31) vorgesehenen zweiten Stromregelkreis, und einen die Stromregelkreise überlagerten Drehzahlregelkreis aufweist, welcher abhängig von einer vorgegebenen Soll-Drehzahl (nₛₒₗₗ) für den permanenterregten Drehstromsynchronmotor (31) und einer Ist-Drehzahl (nᵢₛₜ) des permanenterregten Drehstromsynchronmotors (30) einen Querstrom-Sollwert (i_{q,soll}) für den ersten Stromregelkreis erzeugt, und die Ausgangssignale der beiden Stromregelkreise zumindest indirekt zum Ansteuern des Umrichters (32) vorgesehen sind, **dadurch gekennzeichnet, daß** das Haushaltskältegerät (1) eingerichtet ist, für ein Anfahren des permanenterregten Drehstromsynchronmotor (31) aus dem Stillstand eine Soll-Drehzahl (nₛₒₗₗ) für die feldorientierte Regelung (34) in Abhängigkeit eines Kühlbedarfs für den kühlbaren Innenraum (3) zu ermitteln, und einen für den zweiten Stromregelkreis vorgesehenen Längsstrom-Sollwert (i_{d,soll}) oder dessen Betrag beginnend von "Null" bis zu einem vorgegebenen Wert innerhalb einer ersten Zeitdauer gemäß eines vorgegebenen Verlaufs anzupassen, sodass der permanenterregte Drehstromsynchronmotor (31) aufgrund des resultierenden Längsstroms ein zum Hauptdrehmoment zusätzliches Drehmoment erzeugt, sodass das Gesamtdrehmoment des permanenterregten Drehstromsynchronmotors (31) größer ist als das Hauptdrehmoment.

7. Haushaltskältegerät nach Anspruch 6, **dadurch gekennzeichnet, dass** der erste Stromregelkreis einen ersten Stromregler (41) und der zweite Stromregelkreis einen zweiten Stromregler (42) aufweist, und das Eingangssignal für den ersten Stromregler (41) eine Abweichung des Querstrom-Istwerts (i_{s,q}) vom Querstrom-Sollwert (i_{q,soll}) und das Eingangssignal für den zweiten Stromregler (42) eine Abweichung des Längsstrom-Istwerts (i_{s,d}) vom Längsstrom-Sollwert (i_{d,soll}) ist.

8. Haushaltskältegerät nach Anspruch 6 oder 7, bei dem das Anpassen des Längsstrom-Sollwertes (i_{d,soll}) oder dessen Betrags während der ersten Zeitdauer rampenförmig erfolgt und/oder bei dem der Verlauf der Anpassungen in einer Look-up Tabelle gespeichert ist oder über eine mathematische Gleichung berechnet wird.

9. Haushaltskältegerät nach einem der Ansprüche 6 bis 8, **dadurch gekennzeichnet, dass** das Haushaltskältegerät (1) eingerichtet ist, den Längsstrom-Sollwert (i_{d,soll}) oder dessen Betrag auf "Null" zu reduzieren, sobald der permanenterregte Drehstromsynchronmotor (31) einen stabilen Arbeitspunkt erreicht hat oder nach einer vorgegebenen zweiten Zeitdauer, und anschließend die feldorientierte Regelung (34) mit einem Längsstrom-Sollwert (i_{d,soll}) gleich "Null" zu betreiben.

10. Haushaltskältegerät nach Anspruch 9, **dadurch gekennzeichnet, dass** das Haushaltskältegerät (1) eingerichtet ist, den Längsstrom-Sollwert (i_{d,soll}) oder dessen Betrag von seinem vorgegebenen Wert bis auf "Null" innerhalb einer vorgegebenen dritten Zeitdauer gemäß eines vorgegebenen Verlaufs stetig zu reduzieren.

## Claims

1. Method for operating a domestic refrigeration appliance (1), which has a thermally insulated carcass (10) with a coolable inner container (2), which delimits a coolable interior chamber (3) provided to store food, a refrigerant circuit (20) provided to cool the coolable interior chamber (3) with a compressor (21) and a controlled electric drive (30), wherein the controlled electric drive (30) has a field-oriented controller (34), a converter (32) and a permanently excited three-phase synchronous motor (31), which is connected downstream of the converter (32) and which is part of the compressor (21) or is provided to drive the compressor (21), wherein the field-oriented controller (34) has a first current control circuit provided to control a transverse current generating a main torque of the permanently excited three-phase synchronous motor (31), a second current control circuit provided to control a longitudinal current for the permanently excited three-phase synchronous motor (31) and a speed control circuit superimposed on the current control circuits, which generates a transverse current target value (*i_{q,tar}*) for the first current control circuit as a function of a predetermined target speed (*nₜₐᵣ*) for the permanently excited three-phase synchronous motor (31) and an actual speed (*n*_{act}) of the permanently excited three-phase synchronous motor (30), and the output signals of the two current control circuits are provided at least indirectly to activate the converter (32), **characterised by** the following method steps:
- for starting up the permanently excited three-phase synchronous motor (31) from stationary, determining a target speed (*nₜₐᵣ*) for the field-oriented controller (34) as a function of a cooling requirement for the coolable interior chamber (3), and
- approaching a longitudinal current target value (*i_{d,tar}*) provided for the second current control circuit or its magnitude starting from "zero" to a predetermined value within a first time period according to a predetermined profile, so that the permanently excited three-phase synchronous motor (31) generates an additional torque to the main torque due to the resulting longitudinal current, so that the overall torque of the permanently excited three-phase synchronous motor (31) is greater than the main torque.

2. Method according to claim 1, in which the first current control circuit has a first current controller (41) and the second current control circuit has a second current controller (42) and the input signal for the first current controller (41) is a deviation of the transverse current actual value (*i_{s,q}*) from the transverse current target value (*i_{q,tar}*) and the input signal for the second current controller (42) is a deviation of the longitudinal current actual value (*i_{s,d}*) from the longitudinal current target value (*i_{d,tar}*).

3. Method according to claim 1 or 2, in which the adjustment of the longitudinal current target value (*i_{d,tar}*) or its magnitude is ramp-like during the first time period and/or in which the profile of the adjustment is stored in a look-up table or is determined by means of a mathematical formula.

4. Method according to one of claims 1 to 3, additionally having the following method steps:
- reducing the longitudinal current target value (*i_{d,tar}*) or its magnitude to "zero" as soon as the permanently excited three-phase synchronous motor (31) reaches a stable working point or after a predetermined second time period, and then
- operating the field-oriented controller (34) with a longitudinal current target value (*i_{d,tar}*) equal to "zero".

5. Method according to claim 4, featuring reducing the longitudinal current target value (*i*_{*d*,*tar*}) or its magnitude from its predetermined value to "zero" within a predetermined third time period according to a predetermined profile.

6. Domestic refrigeration appliance (1), having a thermally insulated carcass (10) with a coolable inner container (2), which delimits a coolable interior chamber (3) provided to store food, a refrigerant circuit (20) provided to cool the coolable interior chamber (3) with a compressor (21) and a field-oriented electric drive (30), which has a field-oriented controller (34), a converter (32) and a permanently excited three-phase synchronous motor (31), which is connected downstream of the converter (32) and which is part of the compressor (21) or is provided to drive the compressor (21), wherein the field-oriented controller (34) has a first current control circuit provided to control a transverse current generating a main torque of the permanently excited three-phase synchronous motor (31), a second current control circuit provided to control a longitudinal current for the permanently excited three-phase synchronous motor (31) and a speed control circuit superimposed on the current control circuits, which generates a transverse current target value (*i_{q,tar}*) for the first current control circuit as a function of a predetermined target speed (*nₜₐᵣ*) for the permanently excited three-phase synchronous motor (31) and an actual speed (n_{act}) of the permanently excited three-phase synchronous motor (30), and the output signals of the two current control circuits are provided at least indirectly to activate the converter (32), **characterised in that**, for starting up the permanently excited three-phase synchronous motor (31) from stationary, the domestic refrigeration appliance (1) is designed to determine a target speed (*nₜₐᵣ*) for the field-oriented controller (34) as a function of a cooling requirement for the coolable interior chamber (3), and to adjust a longitudinal current target value (*i_{d,tar}*) provided for the second current control circuit or its magnitude starting from "zero" to a predetermined value within a first time period according to a predetermined profile, so that the permanently excited three-phase synchronous motor (31) generates an additional torque to the main torque due to the resulting longitudinal current, so that the overall torque of the permanently excited three-phase synchronous motor (31) is greater than the main torque.

7. Domestic refrigeration appliance according to claim 6, **characterised in that** the first current control circuit has a first current controller (41) and the second current control circuit has a second current controller (42) and the input signal for the first current controller (41) is a deviation of the transverse current actual value (*i_{s,q}*) from the transverse current target value (*i_{q,tar}*) and the input signal for the second current controller (42) is a deviation of the longitudinal current actual value (*i*_{*s*,*d*}) from the longitudinal current target value (*i_{d,tar}*).

8. Domestic refrigeration appliance according to claim 6 or 7, in which the adjustment of the longitudinal current target value (*i_{d,tar}*) or its magnitude is ramp-like during the first time period and/or in which the profile of the adjustments is stored in a look-up table or is calculated by way of a mathematical formula.

9. Domestic refrigeration appliance according to one of claims 6 to 8, **characterised in that** the domestic refrigeration appliance (1) is designed to reduce the longitudinal current target value (*i_{d,tar}*) or its magnitude to "zero" as soon as the permanently excited three-phase synchronous motor (31) reaches a stable working point or after a predetermined second time period, and then to operate the field-oriented controller (34) with a longitudinal current target value (*i_{d,tar}*) equal to "zero".

10. Domestic refrigeration appliance according to claim 9, **characterised in that** the domestic refrigeration appliance (1) is designed to continuously reduce the longitudinal current target value (*i_{d,tar}*) or its magnitude from its predetermined value to "zero" within a predetermined third time period according to a predetermined profile.

## Revendications

1. Procédé de fonctionnement d'un appareil frigorifique (1) à usage domestique, lequel comprend un corps (10) calorifugé avec un réservoir intérieur (2) réfrigérable qui délimite un espace intérieur (3) réfrigérable ménagé pour stocker des produits alimentaires, un circuit de fluide frigorigène (20) ménagé pour réfrigérer l'espace intérieur (3) réfrigérable, avec un condenseur (21), et un entraînement (30) électrique régulé, dans lequel l'entraînement (30) électrique régulé comprend un système de régulation (34) orienté champ, un convertisseur (32) et un moteur synchrone triphasé (31) à aimants permanents, monté en aval du convertisseur (32), lequel fait partie du condenseur (21) ou est ménagé pour entraîner le condenseur (21), dans lequel le système de régulation (34) orienté champ comprend un premier circuit de régulation de courant ménagé pour réguler un courant transversal générant un couple principal du moteur synchrone triphasé (31) à aimants permanents, un deuxième circuit de régulation de courant ménagé pour réguler un courant longitudinal pour le moteur synchrone triphasé (31) à aimants permanents, et un circuit de régulation de vitesse superposé aux circuits de régulation de courant, lequel, en fonction d'une vitesse théorique (nₛₒₗₗ) prédéfinie pour le moteur synchrone triphasé (31) à aimants permanents et d'une vitesse réelle (nᵢₛₜ) du moteur synchrone triphasé (30 à aimants permanents, génère une valeur théorique de courant transversal (i_{q,soll}) pour le premier circuit de régulation de courant, et dans lequel les signaux de sortie des deux circuits de régulation de courant sont ménagés au moins indirectement pour commander le convertisseur (32), **caractérisé par** les étapes de procédé suivantes :
- pour un démarrage du moteur synchrone triphasé (31) à partir de l'arrêt, détermination d'une vitesse théorique (nₛₒₗₗ) pour le système de régulation (34) orienté champ en fonction d'un besoin en réfrigération pour l'espace intérieur (3) réfrigérable, et
- approche d'une valeur théorique de courant longitudinal (i_{d,soll}), ménagée pour le deuxième circuit de régulation de courant, ou de son montant en partant de « zéro » jusqu'à une valeur prédéfinie pendant une première durée selon un déroulement prédéfini de sorte que le moteur synchrone triphasé (31) à aimants permanents génère un couple supplémentaire au couple principal en raison du courant longitudinal résultant, de sorte que le couple total du moteur synchrone triphasé (31) à aimants permanents soit supérieur au couple principal.

2. Procédé selon la revendication 1, dans lequel le premier circuit de régulation de courant comprend un premier régulateur de courant (41) et dans lequel le deuxième circuit de régulation de courant comprend un deuxième régulateur de courant (42), et dans lequel le signal d'entrée pour le premier régulateur de courant (41) est une déviation de la valeur réelle de courant transversal (i_{s,q}) par rapport à la valeur théorique de courant transversal (i_{q soll}), et dans lequel le signal d'entrée pour le deuxième régulateur de courant (42) est une déviation de la valeur réelle de courant longitudinal (i_{s,d}) par rapport à la valeur théorique de courant longitudinal (i_{d,soll}).

3. Procédé selon la revendication 1 ou 2, dans lequel l'adaptation de la valeur théorique de courant longitudinal (i_{d,soll}) ou de son montant est réalisée en forme de rampe pendant la première durée et/ou dans lequel le déroulement de l'adaptation est mémorisé dans un tableau look-up ou est déterminé au moyen d'une formule mathématique.

4. Procédé selon l'une quelconque des revendications 1 à 3, comprenant en outre les étapes de procédé suivantes :
- réduction de la valeur théorique de courant longitudinal (i_{d, soll}) ou de son montant à « zéro » dès que le moteur synchrone triphasé (31) à aimants permanents atteint un point de travail stable ou après une deuxième durée prédéfinie, et ensuite
- fonctionnement du système de régulation (34) orienté champ avec une valeur théorique de courant longitudinal (i_{d,soll}) égale à « zéro ».

5. Procédé selon la revendication 4, comprenant la réduction de la valeur théorique de courant longitudinal (i_{d, soll}), ou de son montant, de sa valeur prédéfinie jusqu'à « zéro » pendant une troisième durée prédéfinie selon un déroulement prédéfini.

6. Appareil frigorifique (1) à usage domestique, comprenant un corps (10) calorifugé avec un réservoir intérieur (2) réfrigérable qui délimite un espace intérieur (3) réfrigérable ménagé pour stocker des produits alimentaires, un circuit de fluide frigorigène (20) ménagé pour réfrigérer l'espace intérieur (3) réfrigérable, avec un condenseur (21), et un entraînement (30) électrique orienté champ, qui comprend un système de régulation (34) orienté champ, un convertisseur (32) et un moteur synchrone triphasé (31) à aimants permanents, monté en aval du convertisseur (32), lequel fait partie du condenseur (21) ou est ménagé pour entraîner le condenseur (21), dans lequel le système de régulation (34) orienté champ comprend un premier circuit de régulation de courant ménagé pour réguler un courant transversal générant un couple principal du moteur synchrone triphasé (31) à aimants permanents, un deuxième circuit de régulation de courant ménagé pour réguler un courant longitudinal pour le moteur synchrone triphasé (31) à aimants permanents, et un circuit de régulation de vitesse superposé aux circuits de régulation de courant, lequel, en fonction d'une vitesse théorique (nₛₒₗₗ) prédéfinie pour le moteur synchrone triphasé (31) à aimants permanents et d'une vitesse réelle (nᵢₛₜ) du moteur synchrone triphasé (30 à aimants permanents, génère une valeur théorique de courant transversal (i_{q,soll}) pour le premier circuit de régulation de courant, et dans lequel les signaux de sortie des deux circuits de régulation de courant sont ménagés au moins indirectement pour commander le convertisseur (32), **caractérisé en ce que**
l'appareil frigorifique (1) à usage domestique est configuré, pour un démarrage du moteur synchrone triphasé (31) à aimants permanents à partir de l'arrêt, pour déterminer une vitesse théorique (nₛₒₗₗ) pour le système de régulation (34) orienté champ en fonction d'un besoin en réfrigération pour l'espace intérieur (3) réfrigérable, et pour adapter une valeur théorique de courant longitudinal (i_{d,soll}), ménagée pour le deuxième circuit de régulation de courant, ou son montant en partant de « zéro » jusqu'à une valeur prédéfinie pendant une première durée selon un déroulement prédéfini de sorte que le moteur synchrone triphasé (31) à aimants permanents génère un couple supplémentaire au couple principal en raison du courant longitudinal résultant, de sorte que le couple total du moteur synchrone triphasé (31) à aimants permanents soit supérieur au couple principal.

7. Appareil frigorifique à usage domestique selon la revendication 6, **caractérisé en ce que** le premier circuit de régulation de courant comprend un premier régulateur de courant (41) et **en ce que** le deuxième circuit de régulation de courant comprend un deuxième régulateur de courant (42), et **en ce que** le signal d'entrée pour le premier régulateur de courant (41) est une déviation de la valeur réelle de courant transversal (i_{s,q}) par rapport à la valeur théorique de courant transversal (i_{q,soll}), et **en ce que** le signal d'entrée pour le deuxième régulateur de courant (42) est une déviation de la valeur réelle de courant longitudinal (i_{s,d}) par rapport à la valeur théorique de courant longitudinal (i_{d,soll}).

8. Appareil frigorifique à usage domestique selon la revendication 6 ou 7, dans lequel l'adaptation de la valeur théorique de courant longitudinal (i_{d,soll}) ou de son montant est réalisée en forme de rampe pendant la première durée et/ou dans lequel le déroulement des adaptations est mémorisé dans un tableau look-up ou est déterminé au moyen d'une formule mathématique.

9. Appareil frigorifique à usage domestique selon l'une quelconque des revendications 6 à 8, **caractérisé en ce que** l'appareil frigorifique (1) à usage domestique est configuré pour réduire la valeur théorique de courant longitudinal (i_{d,soll}) ou son montant à « zéro » dès que le moteur synchrone triphasé (31) à aimants permanents atteint un point de travail stable ou après une deuxième durée prédéfinie, et ensuite pour faire fonctionner le système de régulation (34) orienté champ avec une valeur théorique de courant longitudinal (i_{d,soll}) égale à « zéro ».

10. Appareil frigorifique à usage domestique selon la revendication 9, **caractérisé en ce que** l'appareil frigorifique (1) à usage domestique est configuré pour réduire continuellement la valeur théorique de courant longitudinal (i_{d,soll}) ou son montant de sa valeur prédéfinie jusqu'à « zéro » pendant une troisième durée prédéfinie selon un déroulement prédéfini.
